(19) Europäisches Patentamt / European Patent Office / Office européen des brevets

(11) EP 4 186 711 B1

(12) **EUROPEAN PATENT SPECIFICATION**

(45) Date of publication and mention of the grant of the patent:
**22.01.2025 Bulletin 2025/04**

(21) Application number: **22196625.2**

(22) Date of filing: **20.09.2022**

(51) International Patent Classification (IPC):
***B60C 1/00*** *(2006.01)* ***B60C 3/04*** *(2006.01)*
***B60C 9/28*** *(2006.01)* ***B60C 11/00*** *(2006.01)*
***B60C 11/03*** *(2006.01)* ***B60C 11/12*** *(2006.01)*

(52) Cooperative Patent Classification (CPC):
**B60C 11/0304; B60C 1/0016; B60C 3/04; B60C 9/28; B60C 11/005; B60C 11/0306; B60C 11/032;** B60C 2011/0016; B60C 2011/0025; B60C 2011/0344; B60C 2011/1209; B60C 2200/04; Y02T 10/86

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2021 JP 2021191303**

(43) Date of publication of application:
**31.05.2023 Bulletin 2023/22**

(73) Proprietor: **Sumitomo Rubber Industries, Ltd.**
**Kobe-shi, Hyogo 651-0072 (JP)**

(72) Inventor: **TANAKA, Tatsuhiro**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 915 806**
**EP-A2- 3 798 258**
**WO-A1-2018/079800**
**WO-A1-2021/075469**
**US-A1- 2013 240 107**
**US-A1- 2017 305 199**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a pneumatic tire having improved wet grip performance during high-speed turning.

BACKGROUND OF THE INVENTION

There has been a growing demand for achieving reduction in rolling resistance reduction, wet grip performance, etc. at a high level, as performances of a tire for a passenger car.

Therefore, as the tire for a passenger car, various pneumatic tires comprising a tread rubber comprising a tread surface rubber layer located on an outermost surface of a tread and a tread inner rubber layer located on an inner side in a tire radial direction with respect to the tread surface rubber layer have been proposed (e.g., JP 2014-162242 A). In such a tire, the tread surface rubber layer is a rubber layer having a relatively high rigidity, and the tread inner rubber layer is a rubber layer having a relatively low rigidity. As a result, during straight running, the inner rubber layer having a relatively low rigidity suppresses, for example, hysteresis loss and reduces rolling resistance of the tire.

A known tire is disclosed in the document EP 3798258 A.

SUMMARY OF THE INVENTION

However, with recent development of expressways and improvement of vehicle performance, it is not uncommon to travel a long distance at a high speed. Under such circumstances, the pneumatic tire as described above has a high rigidity on the tread surface rubber layer, so that it cannot be said that grounding property with a road surface is sufficient during turning, and there is room for improvement in wet grip performance during high-speed turning.

It is an object of the present invention to provide a pneumatic tire having improved wet grip performance during high-speed turning.

As a result of intensive studies, it has been found that, in a tire in which a cross-sectional width of the tire and a belt layer width of the tire satisfy predetermined requirements, the above-described problem can be solved by subjecting compounding of a rubber composition of a tread surface rubber layer under a specific condition and setting a total styrene amount of the rubber composition of a tread surface rubber layer to be larger than a total styrene amount of a rubber composition of a tread inner rubber layer.

That is, the present invention relates to a tire, as defined in claim 1, having a tread part and a belt layer, the tread part comprising at least a first layer forming a tread surface and a second layer adjacent to the inner side of the first layer in a tire radial direction, wherein a rubber component of the first layer and a rubber component of the second layer each comprises a styrene butadiene rubber, wherein a content of a butadiene rubber in the rubber component of the first layer is 25% by mass or less, wherein a glass transition temperature $Tg_1$ (°C) of the rubber composition of the first layer is -18°C or higher, wherein a total styrene amount S1 (% by mass) in the rubber component of the first layer is 1 to 35% by mass, wherein a total styrene amount S2 (% by mass) in the rubber component of the second layer is smaller than S1, and wherein a cross-sectional width Wt (mm) of the tire and a belt layer width B (mm) of the tire when a standardized load is applied to the tire and the tread is pressed against a flat surface in a standardized state satisfy $(B-16)/Wt \leqq 0.75$.

According to the present invention, provided is a pneumatic tire having improved wet grip performance during high-speed turning.

<Embodiments>

Examples of embodiments of the present invention are shown below.

[1] A tire having a tread part and a belt layer,

the tread part comprising at least a first layer forming a tread surface and a second layer adjacent to the inner side of the first layer in a tire radial direction,
wherein a rubber component of the first layer and a rubber component of the second layer each comprises a styrene butadiene rubber,
wherein a content of a butadiene rubber in the rubber component of the first layer is 25% by mass or less (preferably 23% by mass or less, more preferably 20% by mass or less),
wherein a glass transition temperature $Tg_1$ (°C) of the rubber composition of the first layer is -18°C or higher (preferably -14°C or higher, more preferably -12°C or higher),

wherein a total styrene amount S1 (% by mass) in the rubber component of the first layer is 1 to 35% by mass (preferably 5 to 32% by mass, more preferably 7 to 30% by mass),
wherein a total styrene amount S2 (% by mass) in the rubber component of the second layer is smaller than S1, and
wherein a cross-sectional width Wt (mm) of the tire and a belt layer width B (mm) of the tire when a standardized load is applied to the tire and the tread is pressed against a flat surface in a standardized state satisfy the following inequality (1):

$$(B-16)/Wt \leqq 0.75 \cdots (1)$$

[2] The tire of [1] above, wherein Wt, B, and S1 satisfy the following inequality (2):

$$(S1 \times B - 480)/Wt \leqq 21 \cdots (2)$$

[3] The tire of [1] or [2] above, wherein the rubber composition of the first layer and/or the rubber composition of the second layer comprises silica having an average primary particle size of 20 nm or less (preferably 18 nm or less, more preferably 17 nm or less).
[4] The tire of any one of [1] to [3] above, wherein the rubber composition of the first layer and/or the rubber composition of the second layer comprises 40 to 120 parts by mass of silica based on 100 parts by mass of the rubber component.
[5] The tire of any one of [1] to [4] above, wherein a glass transition temperature $Tg_2$ (°C) of the rubber composition of the second layer is -30°C or higher.
[6] The tire of any one of [1] to [5] above, wherein $Tg_1$-$Tg_2$ is 2°C or higher.
[7] The tire of any one of [1] to [6] above, wherein a content of the butadiene rubber in the rubber component of the second layer is 30% by mass or less.
[8] The tire of any one of [1] to [7] above, wherein S2 is 15 to 35% by mass (preferably 17 to 30% by mass).
[9] The tire of any one of [1] to [8] above, wherein the tread part comprises a base rubber layer adjacent to an outer side of a belt layer in a tire radial direction, the base rubber layer being formed of a rubber composition comprising a rubber component which comprises at least one of an isoprene-based rubber and a butadiene rubber.
[10] The tire of any one of [1] to [9] above, wherein, when a tire outer diameter is Dt (mm), Wt and Dt satisfy the following inequality (3):

$$(\pi/4) \times (Dt2/Wt) \geqq 1500 \cdots (3)$$

[11] The tire of any one of [1] to [10] above, wherein the tread part has land parts partitioned by one or more circumferential grooves extending continuously in a tire circumferential direction and at least one of the land parts has one or more small holes whose opening area to the tread surface is 1 to 15 $mm^2$.

BRIEF DESCRIPTION OF THE DRAWINGS

FIG. 1 is a schematic partial cross-sectional view of a tire according to an embodiment of the present invention.
FIG. 2 is a schematic view of the tire when a tread is pressed against a flat surface.

DETAILED DESCRIPTION

The present invention is a tire having a tread part and a belt layer, the tread part comprising at least a first layer forming a tread surface and a second layer adjacent to the inner side of the first layer in a tire radial direction, wherein a rubber component of the first layer and a rubber component of the second layer each comprises a styrene butadiene rubber, wherein a content of a butadiene rubber in the rubber component of the first layer is 25% by mass or less, wherein a glass transition temperature $Tg_1$ (°C) of the rubber composition of the first layer is -18°C or higher, wherein a total styrene amount S1 (% by mass) in the rubber component of the first layer is 1 to 35% by mass, wherein a total styrene amount S2 (% by mass) in the rubber component of the second layer is smaller than S1, and wherein a cross-sectional width Wt (mm) of the tire and a belt layer width B (mm) of the tire when a standardized load is applied to the tire and the tread is pressed against a flat surface in a standardized state satisfy $(B-16)/Wt \leqq 0.75$.
Although it not intended to be bound by theory, for example, the following can be considered as a mechanism in which effects of the present invention are exhibited.

In the tire of the present invention, (1) since the total styrene amount S1 in the first layer forming the tread surface is 1 to 35% by mass, aggregation of a styrene part in the rubber component is suppressed on the tread surface, and it is considered that followability to a road surface becomes easy to be obtained even during high-speed running. (2) Since the content of the butadiene rubber in the first layer forming the tread surface is 25% by mass or less and the glass transition temperature $Tg_1$ (°C) is -18°C or higher, a loss tangent tan δ in a temperature region higher than Tg becomes high, and it is considered that a good heat generation can be obtained during high-speed turning. (3) Since the total styrene amount S2 of the second layer adjacent to the inner side of the first layer in the tire radial direction is smaller than S1, aggregation of styrene of the styrene-butadiene rubber in the second layer is further suppressed, which makes the tread surface to easily ground the road surface. At the same time, styrene is commonly present in the first layer and the rubber component of the second layer, which makes force to be easily transmitted, and it is considered that a reaction force becomes easy to be obtained during turning. (4) Since the cross-sectional width Wt (mm) of the tire and the belt layer width B (mm) of the tire satisfy (B-16)/Wt ≦ 0.75, an increase in grounding pressure of a tread shoulder part is suppressed, a grounding pressure on the tread surface is made uniform during high-speed turning, and it is considered that force generated on the entire grounding surface can be increased. With cooperation of the above-described (1) to (4), since the tire is in a state where the grounding pressure of the entire tread surface is made uniform, followability and heat generation of the tread surface rubber layer are high, and the force generated on the tread surface is easily transmitted to the inside of the tire, it is considered that a remarkable effect of improving wet grip performance during high-speed turning is achieved.

It is preferable that Wt, B, and S1 satisfy the following inequality (2):

$$(S1 \times B - 480)/Wt \leqq 21 \quad \cdots \quad (2)$$

A product of the styrene content and the belt layer width is reduced with respect to the tire cross-sectional width so that Wt, B, and S1 satisfy the above-described inequality (2). As a result, the grounding property of the tread surface can be increased while preventing aggregation of the styrene part in the surface rubber layer, and it is considered that the wet grip performance during high-speed turning becomes further improved.

The rubber composition of the first layer and/or the second layer preferably comprises silica having an average primary particle size of 20 nm or less.

When the average primary particle size of silica is within the above-described range, interaction between silica and the rubber component becomes easy to occur, and the heat generation can be enhanced, so that it is considered that the wet grip performance during high-speed running can be further improved.

The rubber composition of the first layer and/or the second layer preferably comprises 40 to 120 parts by mass of silica based on 100 parts by mass of the rubber component.

When the content of silica in the rubber composition of the tread is within the above-described range, both dispersibility and heat generation of silica can be achieved, and it is considered that the wet grip performance during high-speed running can be further improved.

A glass transition temperature $Tg_2$ (°C) of the rubber composition of the second layer is preferably -30°C or higher.

When the $Tg_2$ (°C) is -30°C or higher, the loss tangent tan δ of the second layer does not become too low, and the second layer can obtain a constant heat generation even during high-speed turning, achieving both wet grip performance and reduction in rolling resistance during high-speed turning at a high level.

$Tg_1$-$Tg_2$ is preferably 2°C or higher.

When the glass transition temperature $Tg_2$ (°C) of the second layer is lower than the glass transition temperature $Tg_1$ (°C) of the first layer, the loss tangent tan δ of the second layer becomes relatively lower than the loss tangent tan δ of the first layer, and it is considered that the rolling resistance of the entire tread can be reduced. When a difference between the $Tg_1$ and the $Tg_2$ is within the above-described range, the loss tangent tan δ of the second layer becomes relatively lower than the loss tangent tan δ of the first layer, so that the second layer suppresses deformation of the entire tread during braking, the grounding area of the tread surface with the road surface becomes expanded, and it is considered that the wet grip performance is improved.

A content of a butadiene rubber in the rubber component of the second layer is preferably 35% by mass or less.

When the content of the butadiene rubber in the rubber component of the second layer is within the above-described range, a Tg of the second layer does not become too low, and the second layer can obtain a constant heat generation even during high-speed turning, achieving both wet grip performance and reduction in rolling resistance during high-speed turning at a high level.

The total styrene amount S2 in the rubber component of the second layer is preferably 15 to 35% by mass.

When S2 is within the above-described range, aggregation of styrene of the styrene-butadiene rubber in the second layer is further suppressed, so that the tread surface becomes easy to ground the road surface, and the wet grip performance is improved.

The tread comprises a base rubber layer adjacent to an outer side of a belt layer in a tire radial direction, the base rubber layer being preferably formed of a rubber composition comprising a rubber component which comprises at least one of an isoprene-based rubber and a butadiene rubber.

When the tread comprises a base rubber layer adjacent to an outer side of a belt layer in a tire radial direction, the base rubber layer being formed of a rubber composition comprising a rubber component which comprises at least one of an isoprene-based rubber and a butadiene rubber, the second layer and the base rubber layer reduce heat generation of the entire tread, and the rolling resistance can be reduced. Moreover, the second layer and the base rubber layer further suppress deformation of the entire tread during braking, so that the grounding area of the tread surface with the road surface becomes expanded, and the wet grip performance is further improved.

When a tire outer diameter is Dt (mm), it is preferable that the Wt and Dt satisfy the following inequality (3):

$$(\pi/4) \times (Dt2/Wt) \geqq 1500 \cdots (3)$$

When the value of the above-described inequality (3) is within the above-described range and a width of the tread part with respect to a lateral area of the tire is reduced, heat generation derived from the tread can be reduced. As a result, in the tire, a temperature rise due to the heat generation of the tread which contributes most to heat generation can be suppressed, temperatures of the tire and of a side part can be prevented from becoming too high, and the rolling resistance can be reduced.

The tread has land parts partitioned by one or more circumferential grooves extending continuously in the tire circumferential direction, and preferably at least one of the land parts has one or more small holes whose opening area to the tread surface is 0.1 to 15 $mm^2$.

With the tread having one or more small holes, water between the tread surface and the road surface can be removed when the tire grounds a wet road surface, and followability to the road surface becomes easy to be obtained, in particular, the wet grip performance during high-speed running becomes improved.

<Definition>

The "total styrene amount in the rubber component" is a total content (% by mass) of styrene parts comprised in 100% by mass of the rubber component and is calculated by Σ (styrene content of each styrene-containing rubber (% by mass)) × content in rubber component of each styrene-containing rubber (% by mass)/100). For example, when the rubber component is composed of 30% by mass of a first SBR (25% by mass of styrene content), 60% by mass of a second SBR (27.5% by mass of styrene content), and 10% by mass of a NR, a total styrene amount in 100% by mass of the rubber component is 24.0% by mass (= 25 × 30/100 + 27.5 × 60/100).

A "standardized rim" is a rim defined for each tire, in a standard system including a standard on which the tire is based, by the standard. For example, it is a "standard rim" in JATMA, "Design Rim" in TRA, or "Measuring Rim" in ETRTO. Besides, if a size of the tire is not specified in the above-described standard system, the standardized rim is a rim which can be assembled to the tire and whose width is narrowest among rims having the smallest diameter that does not cause air leakage between the rim and the tire.

A "standardized internal pressure" is an air pressure defined for each tire, in a standard system including a standard on which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO. In a case of a tire that is not specified by the standard, the standardized internal pressure is defined as 250 kPa.

The "standardized state" is a state where the tire is rim-assembled on a standardized rim and a standardized internal pressure is filled, and no load is applied. Besides, in a case of a tire having a size not specified in the above-described standard system, the standardized state is a state where the tire is rim-assembled on the minimum rim, 250 kPa is filled, and no load is applied. In the present specification, a dimension of each part of a tire (a tire cross-sectional width Wt, etc.) is measured in the above-described standardized state, unless otherwise specified.

A "standardized load" means a load defined in the standard system including the standard on which the tire is based. A "MAXIMUM LOAD CAPACITY" in the JATMA standard, a "MAXIMUM VALUE" published in "TIRE LOAD LIMITS AT VARIOUS COLD INFLATION PRESSURES" in the TRA standard, and a "LOAD CAPACITY" in the ETRTO standard are standardized loads.

The "tire cross-sectional width Wt" refers to a maximum width of a tire cross-section in a standardized state. However, it is a maximum width between outer surfaces of sidewalls excluding, if any, patterns or characters on the side surface of the tire. Moreover, briefly, it can be measured by calculating a maximum linear distance in a width direction excluding characters on the sidewalls with space between bead parts adjusted to a standardized rim width, in a cross section of the tire cut out in a radial direction.

The "belt layer width B of the tire" is a maximum length in a width direction of a belt layer of a tire in a standardized state. Briefly, in the similar manner as for the above-mentioned cross-sectional width, it can be measured by calculating a maximum linear distance between end points of the belt layer with space between bead parts adjusted to a standardized rim width, in a cross section of the tire cut out in a radial direction. Besides, when the belt layer is formed of a plurality of belt layers, one having the longest distance among them is referred to as a "belt total width B of the tire".
The "tire outer diameter Dt" is a diameter of a tire in a standardized state.
A "flattening ratio (%) of a tire" is calculated by (Ht/Wt) $\times$ 100 from a tire cross-sectional height Ht (mm) and the cross-sectional width Wt (mm) in the standardized state.
The "small hole" refers to a hole extending from an inside of a tread and opening to a tread surface. Moreover, the small holes do not communicate with each other in the circumferential direction and the width direction, and are distinguished from circumferential grooves, a lateral groove, a decorative groove, and the like.
An "oil content" also includes an amount of oil contained in the oil-extended rubber.

<Measuring method>

The "glass transition temperature (Tg) of the rubber composition" is a temperature corresponding to a largest tan $\delta$ value (tan $\delta$ peak temperature) in a tan $\delta$ temperature distribution curve measured under a condition of a frequency of 10 Hz, an initial strain of 10%, an amplitude of $\pm$ 0.5%, and a temperature rising rate of 2°C/min, using a dynamic viscoelasticity evaluation device (for example, EPLEXOR series manufactured by gabo Systemtechnik GmbH), for a specimen sample of the rubber composition (for example, length 20 mm $\times$ width 4 mm $\times$ thickness 1 mm). In a rubber composition for tire, a specimen sample of the rubber composition is taken from the tire, and a longitudinal direction of the specimen sample and a tire circumferential direction are matched.
The "Tg" is a value calculated by differential scanning calorimetry (DSC) in accordance with JIS K 7121 and is applied to, for example, a SBR and a resin component.
The "styrene content" is a value calculated by $^1$H-NMR measurement, and is applied to, for example, a rubber component having a repeating unit derived from styrene such as a SBR.
A "vinyl content (1,2-bond butadiene unit amount)" is a value calculated by infrared absorption spectrometry according to JIS K 6239-2: 2017, and is applied to, for example, a rubber component having a repeating unit derived from butadiene such as a SBR and a BR.
A "cis content (cis-1,4-bond butadiene unit amount)" is a value calculated by infrared absorption spectrometry according to JIS K 6239-2: 2017, and is applied to, for example, a rubber component having a repeating unit derived from butadiene such as a BR.
A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied for a SBR, a BR, a resin component, a liquid polymer, and the like.
The "average primary particle size of silica" can be calculated by observing silica with a transmission or scanning electron microscope, measuring 400 or more primary particles of silica observed in the field of view, and averaging them.
A "$N_2$SA of silica" is measured by the BET method according to ASTM D3037-93.
A "$N_2$SA of carbon black" is measured according to JIS K 6217-2: "Carbon black for rubber industry-Fundamental characteristics-Part 2: Determination of specific surface area-Nitrogen adsorption methods-Single-point procedures".
A "softening point of a resin component" is a temperature at which a sphere drops when the softening point specified in JIS K 6220-1: 2001 is measured with a ring and ball softening point measuring device.

<<Tire>>

The tire that is one embodiment of the present invention is a tire having a tread part and a belt layer, the tread part comprising at least a first layer forming a tread surface and a second layer adjacent to the inner side of the first layer in a tire radial direction, wherein a rubber component of the first layer and a rubber component of the second layer each comprises a styrene butadiene rubber, wherein a total styrene amount S1 (% by mass) in the rubber component of the first layer is 1 to 35% by mass, wherein a total styrene amount S2 (% by mass) in the rubber component of the second layer is smaller than S1, and wherein a cross-sectional width Wt (mm) of the tire and a belt layer width B (mm) of the tire when a standardized load is applied to the tire and the tread is pressed against a flat surface in a standardized state satisfy $(B-16)/Wt \leqq 0.75$.
In the tire of the present invention, the wet grip performance can be improved by arranging a first layer forming a tread surface and a second layer adjacent to the inside of the first layer in the tire radial direction.
A procedure for producing a tire that is one embodiment of the present invention will be described in detail below. However, the following descriptions are illustrative for explaining the present invention, and are not intended to limit the technical scope of the present invention to this description range only. Besides, in the present specification, a numerical

range identified with "to" means to include the numerical values of both ends.

<Tire dimension>

FIG. 1 is an enlarged cross-sectional view showing a part of the tire according to the present invention. A vertical direction is a tire radial direction, a horizontal direction is a tire width direction, and a direction perpendicular to a paper surface is a tire circumferential direction.

The tire of the present invention has a flattening ratio of preferably 45% or more, more preferably 50% or more, further preferably 52% or more, further preferably 55% or more. On the other hand, an upper limit is preferably 80% or less, more preferably 75% or less, further preferably 70% or less. When the flattening ratio is within the above-described ranges, the side part becomes easy to be appropriately flexed during turning, and the outermost surface of the tread becomes easy to touch the ground, so that the wet grip performance during high-speed turning can be further improved.

The tire outer diameter Dt is preferably 585 mm or more, more preferably 600 mm or more, further preferably 625 mm or more. Moreover, the tire outer diameter Dt is preferably less than 843 mm, more preferably less than 725 mm, further preferably less than 685 mm.

The tire cross-sectional width Wt is preferably 125 mm or more, more preferably 150 mm or more, further preferably 175 mm or more. Moreover, the tire cross-sectional width Wt is preferably less than 305 mm, more preferably less than 245 mm, further preferably less than 210 mm.

The tire of the present invention is characterized in that the tire cross-sectional width Wt (mm) and the belt layer width B (mm) of the tire when a standardized load is applied and the tread is pressed against a flat surface satisfy the following inequality (1):

$$(B\text{-}16)/Wt \leqq 0.75 \quad \cdots \quad (1)$$

The value of the inequality (1) is preferably 0.74 or less, more preferably 0.73 or less, further preferably 0.72 or less, from the viewpoint of effects of the present invention. A lower limit value of the inequality (1) is, but not particularly limited to, preferably 0.50 or more, more preferably 0.60 or more, further preferably 0.65 or more.

In the tire of the present invention, it is preferable that Wt, B, and S1 satisfy the following inequality (2):

$$(S1 \times B - 480)/Wt \leqq 21 \quad \cdots \quad (2)$$

The value of the inequality (2) is preferably 18 or less, more preferably 15 or less, further preferably 10 or less. Moreover, a lower limit value of the inequality (2) is, but not particularly limited to, preferably 1 or more, more preferably 2 or more.

In the tire of the present invention, when the tire cross-sectional width is Wt (mm) and the tire outer diameter is Dt (mm), it is preferable that Wt and Dt satisfy the following inequality (3):

$$(\pi/4) \times (Dt2/Wt) \geqq 1500 \quad \cdots \quad (3)$$

Here, when Dt increases, the value of the inequality (3) increases, and conversely, when Dt decreases, the value decreases. On the other hand, when Wt increases, the value of the inequality (3) decreases, and conversely, when Wt decreases, the value increases. Therefore, paying attention to this point, Dt and Wt can be adjusted so as to satisfy the inequality (3).

The value of the inequality (3) is preferably 1500 or more, more preferably 1520 or more, further preferably 1525 or more. Moreover, an upper limit value of the inequality (3) is, but not particularly limited to, preferably 2800 or less, more preferably 2700 or less, further preferably 2600 or less.

Specific examples of a tire size satisfying the inequality (3) include 125/65R19, 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, 195/55R20, 205/55R16, 195/65R15, 205/55R16, and the like.

<Structure of tread>

As illustrated in FIG. 1, the tread part of the tire of the present invention comprises a first layer 4 and a second layer 5, an outer surface of the first layer 4 forming a tread surface and the second layer 5 being adjacent to the inside of the first layer in the tire radial direction. Moreover, the tread part preferably comprises a base rubber layer 6 adjacent to an outer side of a belt layer 3 in the tire radial direction. As long as the object of the present invention is achieved, one or more rubber

layers may be further provided between the second layer 5 and the base rubber layer 6.

<Tread pattern>

FIG. 2 is a schematic view of a grounding surface when a tread is pressed against a flat surface. As shown in FIG. 2, a tread 10 of the tire according to the present embodiment has a circumferential groove 1 extending continuously in a tire circumferential direction C (in an example of FIG. 2, extending linearly along the tire circumferential direction), a lateral groove 21 and sipes 22 and 23 extending in a width direction.

The tread 10 has a plurality of circumferential grooves 1 extending continuously in the circumferential direction C. In FIG. 2, three circumferential grooves 1 are provided, though the number of circumferential grooves is not particularly limited and may be, for example, two to five. Moreover, in the present embodiment, although the circumferential groove 1 extends linearly along the circumferential direction, it is not limited to such an embodiment, and may extend in, for example, a wavy shape, a sinusoidal shape, or a zigzag shape along the circumferential direction.

The tread 10 has land parts 2 partitioned by a plurality of circumferential grooves 1 in a tire width direction W. A shoulder land part 11 is a pair of land parts formed between the circumferential groove 1 and a tread end Te. A center land part 12 is a land part formed between a pair of shoulder land parts 11. In FIG. 3, two center land parts 12 are provided, though the number of center land parts is not particularly limited and may be, for example, one to five.

It is preferable that the land part 2 is provided with a lateral groove (width direction groove) and/or sipes. In FIG. 2, the shoulder land part 11 is provided with a plurality of shoulder lateral grooves 21 having a terminal end opened to the circumferential groove 1 and a plurality of shoulder sipes 22 having one end opened to the circumferential groove 1, and the center land part 12 is provided with a plurality of center sipes 23 having one end opened to the circumferential groove 1. In the present invention, it is preferable not to have such a lateral groove (width direction groove) and sipes that cross the center land part 12 and have both ends opened to the circumferential groove.

The land part 2 preferably has one or more small holes. In FIG. 2, in the center land part 12, two small holes 24 are arranged in land parts being surrounded by the center sipes 23. An opening area of the small hole to the tread surface is preferably 0.1 to 15 $mm^2$, more preferably 0.5 to 10 $mm^2$, further preferably 1.0 to 7.0 $mm^2$, particularly preferably 1.5 to 5.0 $mm^2$. When such small hole having the opening area is provided, water between the tread surface and the road surface can be removed when the tire grounds a wet road surface, and followability to the road surface becomes easy to be obtained, in particular, the wet grip performance during high-speed running becomes improved. Moreover, it becomes possible to increase the surface area of the tread part without adversely affecting other performances, and therefore, heat dissipation property at the tread part becomes improved, and it is considered that temperature rises at the tire and the side part can be suppressed.

Besides, in the present specification, a "groove" including a circumferential groove and a width direction groove refers to a recess having a width at least larger than 2.0 mm. On the other hand, in the present specification, a "sipe" refers to a narrow notch having a width of 2.0 mm or less, preferably 0.5 to 1.5 mm.

[Physical properties of rubber composition]

In the present invention, the glass transition temperature $Tg_1$ of the rubber composition of the first layer is -18°C or higher. When the glass transition temperature $Tg_1$ (°C) is -18°C or higher, the loss tangent tan $\delta$ in the temperature region higher than Tg becomes high, and a good heat generation can be obtained during high-speed turning, improving the wet grip performance during high-speed turning.

<$Tg_1$>

The $Tg_1$ (°C) is preferably -17.5°C or higher, more preferably -17°C or higher, further preferably -16°C or higher. An upper limit value of the $Tg_1$ (°C) is, but not particularly limited to, preferably -7°C or lower, more preferably - 9°C or lower, further preferably -10°C or lower.

<Tg2>

In the present invention, the glass transition temperature $Tg_2$ of the rubber composition of the second layer is preferably -30°C or higher. When the glass transition temperature $Tg_2$ (°C) is -30°C or higher, the loss tangent tan $\delta$ of the second layer does not become too low, and the second layer can obtain a constant heat generation even during high-speed turning, achieving both wet grip performance and reduction in rolling resistance during high-speed turning at a high level.

The $Tg_2$ (°C) is preferably -30°C or higher, further preferably -25°C or higher, particularly preferably -20°C or higher, most preferably -19°C or higher. An upper limit value of the $Tg_2$ (°C) is, but not particularly limited to, preferably - 5°C

or lower, more preferably -8°C or lower, from the viewpoint of reducing rolling resistance.

The above-described $Tg_1$ (°C) and $Tg_2$ (°C) can be appropriately adjusted depending on a ratio of a rubber component of a rubber composition of a respective rubber layer, an amount of styrene in the rubber component, a Tg of each rubber component, a type and an amount of a plasticizing agent, and the like. For example, the $Tg_1$ (°C) and $Tg_2$ (°C) can be lowered such as by reducing an amount of styrene in a rubber component, using a styrene-butadiene rubber having a low Tg, and using an ester-based plasticizing agent having a low Tg as a plasticizing agent. On the other hand, the $Tg_1$ (°C) and $Tg_2$ (°C) can be increased such as by increasing an amount of styrene in a rubber component, using a styrene-butadiene rubber having a high Tg, and using a resin component having a high Tg as a plasticizing agent.

In the present invention, $Tg_1$-$Tg_2$ is preferably 2°C or higher. When $Tg_1$-$Tg_2$ is 2°C or higher, the loss tangent tan $\delta$ of the second layer becomes relatively lower than the loss tangent tan $\delta$ of the first layer, so that the second layer suppresses deformation of the entire tread during braking, the grounding area of the tread surface with the road surface becomes expanded, and the wet grip performance is improved.

$Tg_1$-$Tg_2$ is more preferably 3°C or higher, further preferably 5°C or higher, further preferably 8°C or higher. Moreover, an upper limit value of $Tg_1$-$Tg_2$ is preferably 30°C or lower, more preferably 28°C or lower, further preferably 24°C or lower, further preferably 20°C or lower, from the viewpoint that heat generation becomes easily obtained even in the second layer described above.

[Compounding of rubber composition]

The rubber compositions of the first layer, the second layer, and the base rubber layer of the present invention are characterized in that a total styrene amount of the rubber composition of the second layer is smaller than a total styrene amount of the rubber composition of the first layer. The rubber composition of each layer (hereinafter referred to as the rubber composition according to the present invention) can be produced by using raw materials described below. The followings are detailed descriptions.

<Rubber component>

As rubber components used in production of the rubber composition according to the present invention, a styrene-butadiene rubber (SBR), a butadiene rubber (BR) and an isoprene-based rubber are appropriately used. Moreover, in the present invention, each of the rubber compositions of the first layer and the second layer comprises a SBR as an essential rubber component. Furthermore, in the present invention, the rubber composition of the base rubber layer may not comprise a SBR. These rubber components may be used alone, or two or more different rubber components may be used in combination.

In the present invention, each of the rubber compositions of the first layer and the second layer preferably comprises a BR. Moreover, in the present invention, the rubber composition of the base rubber layer preferably comprises an isoprene-based rubber, and more preferably comprises an isoprene-based rubber and a BR.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable, and a modified S-SBR is more preferable. Furthermore, hydrogenated ones of these SBRs (hydrogenated SBRs) and the like can also be used. These SBRs may be used alone, or two or more thereof may be used in combination.

Examples of the S-SBR that can be used in the present invention include S-SBRs manufactured and sold by JSR Corporation, Sumitomo Chemical Co., Ltd., Ube Industries, Ltd., Asahi Kasei Corporation, ZS Elastomer Co., Ltd., etc.

A styrene content of the SBR is preferably 1% by mass or more, more preferably 5% by mass or more, further preferably 8% by mass or more, from the viewpoint of grip performance. On the other hand, the styrene content of the SBR is preferably 40% by mass or less, more preferably 25% by mass or less, further preferably 20% by mass or less. When the styrene content of the SBR exceeds 40% by mass, there is a concern that styrene groups become adjacent to each other and a domain due to the styrene groups becomes too large, making it difficult to obtain a good grounding property. Besides, in the present specification, the styrene content of the SBR is measured by the above-described measuring method.

A vinyl content of the SBR is preferably 10 mol% or more, more preferably 15 mol% or more, further preferably 20 mol% or more, from the viewpoints of ensuring reactivity with silica, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, wet grip performance, elongation at break,

and abrasion resistance. Besides, in the present specification, the vinyl content of the SBR (1,2-bond butadiene unit amount) is measured by the above-described measuring method.

A weight-average molecular weight (Mw) of the SBR is preferably 200,000 or more, more preferably 300,000 or more, further preferably 400,000 or more, particularly preferably 500,000 or more, from the viewpoints of wet grip performance and abrasion resistance. Moreover, the Mw is preferably 2,000,000 or less, more preferably 1,500,000 or less, further preferably 1,000,000 or less, from the viewpoints of cross-linking uniformity and the like. Besides, the Mw is measured by the above-described measuring method.

In the rubber components of the first layer and the second layer, a content of the SBR in the rubber component is preferably 30% by mass or more, more preferably 40% by mass or more, further preferably 50% by mass or more, particularly preferably 60% by mass or more, from the viewpoint of wet grip performance. Moreover, in the rubber compositions of the first layer and the second layer, an upper limit value of the content of the SBR in the rubber component is not particularly limited and may be 100% by mass, but it is preferably 95% by mass or less, more preferably 90% by mass or less, further preferably 85% by mass or less, from the viewpoint of abrasion resistance.

(BR)

A BR is not particularly limited, and those common in the tire industry can be used such as, for example, a BR having a cis 1,4 bond content of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR).

Examples of the high cis BR include, for example, high cis BRs manufactured and sold by JSR Corporation, Zeon Corporation, Ube Industries, Ltd., etc., and the like. When the high cis BR is compounded, low temperature characteristics and abrasion resistance can be improved. Examples of the rare-earth-based BR include, for example, rare-earth-based BRs sold by LANXESS, etc.

Examples of the SPB-containing BR include those in which 1,2-syndiotactic polybutadiene crystal is chemically bonded with BR and dispersed, but not those in which the crystal is simply dispersed in the BR. Examples of such SPB-containing BR include SPB-containing BRs sold by Ube Industries, Ltd., etc.

Examples of the modified BRs include those obtained by adding a tin compound after polymerizing 1,3-butadiene by a lithium initiator, and further those in which the terminal of the modified BR molecule has tin-carbon bond (a tin-modified BR), a butadiene rubber (a modified BR for silica) having a condensed alkoxysilane compound at its active terminal, and the like. Examples of such modified BRs include, for example, a tin-modified BR manufactured by ZS Elastomer Co., Ltd., a S-modified polymer (modified for silica), and the like.

A weight-average molecular weight (Mw) of the BR is preferably 300,000 or more, more preferably 350,000 or more, further preferably 400,000 or more, from the viewpoints of abrasion resistance and grip performance, etc. Moreover, it is preferably 2,000,000 or less, more preferably 1,000,000 or less, from the viewpoints of cross-linking uniformity, etc. Besides, the Mw can be calculated by the above-described measuring method.

In the present invention, when the rubber composition of the first layer comprises a BR, a content of the BR in the rubber component is 25% by mass or less. The content of the BR in the rubber component of the rubber composition of the first layer is preferably 23% by mass or less, more preferably 22% by mass or less, most preferably 21% by mass or less. Moreover, the content of the BR in the rubber component of the rubber composition of the first layer is preferably 5% by mass or more, more preferably 10% by mass or more, further preferably 15% by mass or more, most preferably 18% by mass or more, from the viewpoint of wet grip performance.

When the rubber composition of the second layer comprises a BR, a content of the BR in the rubber component is preferably 45% by mass or less, more preferably 40% by mass or less, further preferably 38% by mass or less, particularly preferably 35% by mass or less, from the viewpoint of the effects of the present invention. Moreover, the content of the BR in the rubber component of the rubber composition of the second layer is preferably 5% by mass or more, more preferably 10% by mass or more, further preferably 15% by mass or more, most preferably 20% by mass or more, from the viewpoint of wet grip performance.

When the rubber composition of the base rubber layer comprises a BR, a content of the BR in the rubber component is preferably 5% by mass or more, more preferably 10% by mass or more, from the viewpoint of the effects of the present invention. Moreover, when the rubber composition of the base rubber layer comprises a BR, a content of the BR in the rubber component is preferably 70% by mass or less, more preferably 60% by mass or less, from the viewpoint of the effects of the present invention.

(Isoprene-based rubber)

As an isoprene-based rubber, for example, those common in the tire industry can be used, such as an isoprene

rubber (IR) and a natural rubber. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber (UPNR), and a grafted natural rubber, and the like. These rubbers may be used alone, or two or more thereof may be used in combination.

The NR is not particularly limited, and those common in the tire industry can be used, examples of which include, for example, SIR20, RSS#3, TSR20, and the like.

When each of the rubber compositions of the first layer and the second layer comprises an isoprene-based rubber, a content of the isoprene-based rubber in the rubber component is not particularly limited.

When the rubber composition of the base rubber layer comprises an isoprene-based rubber, a content of the isoprene-based rubber in the rubber component is preferably 30% by mass or more, more preferably 40% by mass or more, further preferably 50% by mass or more, particularly preferably 60% by mass or more, most preferably 50% by mass or more, from the viewpoint of the effects of the present invention. Moreover, in the rubber composition of the base rubber layer, an upper limit value of the content of the isoprene-based rubber in the rubber component is not particularly limited and can be 100% by mass.

(Other rubber components)

As rubber components in the rubber composition according to the present invention, rubber components other than the above-described SBR, BR and isoprene-based rubber may be compounded. As other rubber components, cross-linkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

<S1>

In the rubber composition according to the present invention, by setting the total styrene amount (S1) in the first layer to be 35% by mass or less, aggregation of the styrene part in the rubber component is suppressed on the tread surface, and followability to a road surface becomes easy to be obtained. S1 is preferably 25% by mass or less, more preferably 20% by mass or less, further preferably 10% by mass or less.

In the rubber composition according to the present invention, by setting the total styrene amount (S1) in the first layer to be 1% by mass or more, the wet grip performance can be improved. S1 is preferably 2% by mass or more, more preferably 5% by mass or more.

<S2>

In the rubber composition according to the present invention, the total styrene amount (S2) in the second layer is smaller than the total styrene amount (S1) in the first layer. By setting the total styrene amount S2 in the second layer to be smaller than the total styrene amount S1 in the first layer, aggregation of styrene of the styrene-butadiene rubber in the second layer is further suppressed, which makes the tread surface to easily ground the road surface.

In the rubber composition according to the present invention, the total styrene amount (S2) in the second layer is preferably 35% by mass or less, more preferably 25% by mass or less, further preferably 20% by mass or less, most preferably 10% by mass or less, from the viewpoint of the effects of the present invention. Moreover, the total styrene amount (S2) in the second layer is preferably 1% by mass or more, more preferably 1.5% by mass or more, further preferably 2% by mass or more, from the viewpoint of the effects of the present invention.

In the rubber composition according to the present invention, the total styrene amount in the rubber composition of the base rubber layer is not particularly limited.

<Filler>

Each of the rubber compositions of the first layer and the second layer preferably comprises silica as a filler, and more preferably comprises carbon black and silica. The rubber composition of the base rubber layer preferably comprises carbon black as a filler.

(Silica)

When silica is compounded in the rubber composition according to the present invention, the rolling resistance can be reduced and the wet grip performance can be improved. Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. Silica may be used alone, or two or more thereof may be used in combination. Moreover, as these silica, those made of a biomass material as a raw material such as rice husks may be used in addition to those made of hydrous silica or the like as a raw material.

A nitrogen adsorption specific surface area ($N_2SA$) of silica is preferably 150 $m^2/g$ or more, more preferably 180 $m^2/g$ or more, further preferably 200 $m^2/g$ or more, from the viewpoint of elongation at break. Moreover, it is preferably 300 $m^2/g$ or less, more preferably 250 $m^2/g$ or less, from the viewpoints of processability and reduction in rolling resistance. Besides, a BET specific surface area of silica in the present specification can be measured by the above-described measuring method.

The average primary particle size of silica is preferably 20 nm or less, more preferably 18 nm or less, further preferably 17 nm or less. A lower limit value of the average primary particle size is, but not particularly limited to, preferably 1 nm or more, more preferably 3 nm or more, further preferably 5 nm or more, from the viewpoint of dispersibility of silica. When the average primary particle size of silica is within the above-described ranges, dispersibility of silica can be further improved, and reinforcing property, fracture characteristics, and abrasion resistance can be further improved. Besides, the average primary particle size of silica can be calculated by the above-described measuring method.

When each of the rubber compositions of the first layer and the second layer comprises silica, a content of silica based on 100 parts by mass of the rubber component is preferably 40 parts by mass or more, preferably 50 parts by mass or more, further preferably 60 parts by mass or more, from the viewpoints of reduction in rolling resistance and improvement in wet grip performance. Moreover, it is preferably 150 parts by mass or less, preferably 140 parts by mass or less, further preferably 130 parts by mass or less, from the viewpoint of suppressing increase in rolling resistance due to deterioration of dispersibility of silica in a rubber. When the base rubber layer comprises silica, a content of silica based on 100 parts by mass of the rubber component is not particularly limited.

(Carbon black)

Carbon black is not particularly limited, and those common in the tire industry can be used such as GPF, FEF, HAF, ISAF, and SAF, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. They may be used alone, or two or more thereof may be used in combination.

A nitrogen adsorption specific surface area ($N_2SA$) of carbon black is preferably 50 $m^2/g$ or more, more preferably 80 $m^2/g$ or more, further preferably 100 $m^2/g$ or more, from the viewpoints of weather resistance and reinforcing property. Moreover, it is preferably 250 $m^2/g$ or less, more preferably 220 $m^2/g$ or less, from the viewpoints of dispersibility, reduction in rolling resistance, fracture characteristics, and durability. Besides, the $N_2SA$ of carbon black in the present specification can be measured by the above-described measuring method.

When the rubber composition of the first layer comprises carbon black, a content of carbon black based on 100 parts by mass of the rubber component is preferably 1 part by mass or more, more preferably 3 parts by mass or more, further preferably 5 parts by mass or more, from the viewpoints of weather resistance and reinforcing property. Moreover, it is preferably 40 parts by mass or less, more preferably 30 parts by mass or less, further preferably 20 parts by mass or less, from the viewpoint of reduction in rolling resistance.

When the rubber composition of the second layer comprises carbon black, a content of carbon black based on 100 parts by mass of the rubber component is preferably 1 part by mass or more, more preferably 3 parts by mass or more, further preferably 5 parts by mass or more, from the viewpoints of weather resistance and reinforcing property. Moreover, it is preferably 60 parts by mass or less, more preferably 50 parts by mass or less, further preferably 40 parts by mass or less, from the viewpoint of reduction in rolling resistance.

When the base rubber layer comprises carbon black, a content of carbon black based on 100 parts by mass of the rubber component is preferably 10 parts by mass or more, more preferably 20 parts by mass or more, from the viewpoint of reinforcing property. Moreover, it is preferably 100 parts by mass or less, more preferably 90 parts by mass or less, from the viewpoint of the effects of the present invention.

(Other fillers)

As fillers other than carbon black and silica, those conventionally and commonly used in the tire industry can be compounded, such as aluminum hydroxide, calcium carbonate, alumina, clay, and talc.

(Silane coupling agent)

Silica is preferably used in combination with a silane coupling agent. The silane coupling agent is not particularly limited, and any silane coupling agent conventionally used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferably compounded. As the silane coupling agents, for example, those commercially available from Momentive Performance Materials, etc. can be used. These silane coupling agents may be used alone, or two or more thereof may be used in combination.

It is preferable that the silane coupling agent having a mercapto group is a compound represented by the following formula (4) and/or a compound comprising a bond unit A represented by the following formula (5) and a bond unit B represented by the following formula (6).

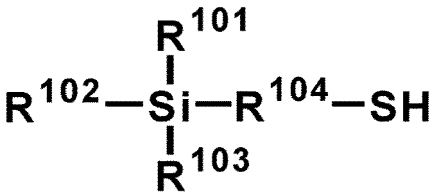

(4)

(wherein, $R^{101}$, $R^{102}$, and $R^{103}$ each independently represents an alkyl having 1 to 12 carbon atoms, an alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

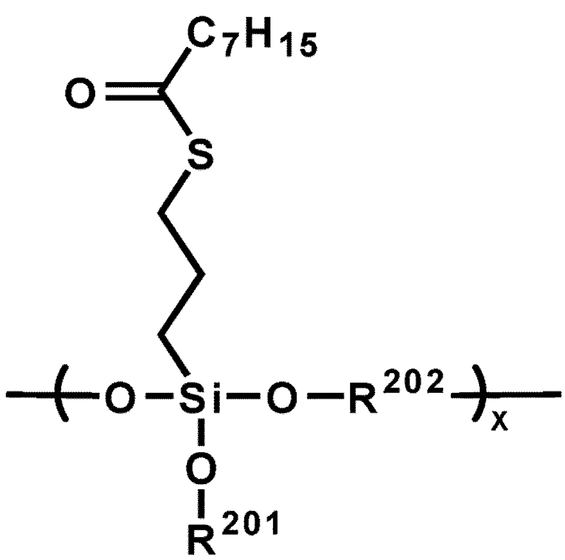

(5)

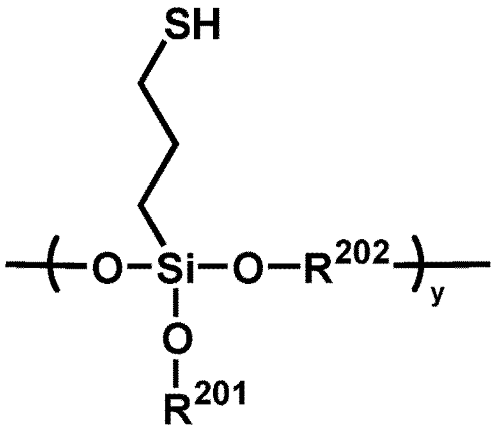

(6)

(wherein, x represents an integer of 0 or more; y represents an integer of 1 or more; $R^{201}$ represents hydrogen atom, or an alkyl having 1 to 30 carbon atoms, an alkenyl having 2 to 30 carbon atoms or an alkynyl having 2 to 30 carbon atoms optionally substituted with a halogen atom, hydroxyl or carboxyl; and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by the formula (4) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (7) (Si363 manufactured by Evonik Degussa GmbH), and the like, and the compound represented by the following formula can be appropriately used. They may be used alone, or two or more thereof may be used in combination.

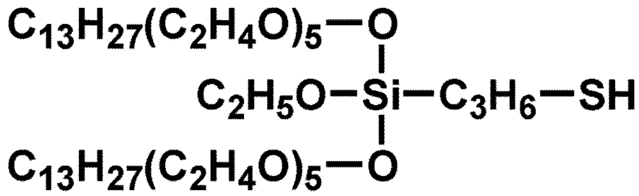

(7)

By using the compound comprising the bond unit A represented by the formula (5) and the bond unit B represented by the above-described formula (6), an increase in viscosity during processing is suppressed as compared with a sulfide-based silane coupling agent such as bis-(3-triethoxysilylpropyl)tetrasulfide. Therefore, silica dispersibility becomes further improved, rolling resistance is reduced, and wet grip performance and elongation at break tend to be further improved. It is considered that this is because a sulfide part of the bond unit A is a C-S-C bond and thus is thermally stable as compared with tetrasulfide or disulfide, thereby resulting in a small increase in Mooney viscosity.

A content of the bond unit A is preferably 30 to 99 mol%, more preferably 50 to 90 mol%, from the viewpoint of suppressing an increase in viscosity during processing. Moreover, a content of the bond unit B is preferably 1 to 70 mol%, more preferably 5 to 65 mol%, further preferably 10 to 55 mol%. Furthermore, a total content of the bond units A and B is preferably 95 mol% or more, more preferably 98 mol% or more, particularly preferably 100 mol%. Besides, the content of the bond units A and B is an amount including the case where the bond units A and B are located at the terminal of the silane coupling agent. A form where the bond units A and B are located at the terminal of the silane coupling agent is not particularly limited, as long as it forms units corresponding to the formula (5) representing the bond unit A and the formula (6) representing the bond unit B.

In a compound comprising the bond unit A represented by the formula (5) and the bond unit B represented by the formula (6), a total number of repetitions (x + y) of the number of repetitions of the bond unit A (x) and the number of repetitions of the bond unit B (y) is preferably in a range of 3 to 300. Within this range, mercaptosilane of the bond unit B is covered with $-C_7H_{15}$ of the bond unit A, so that shortening of scorch time can be suppressed, and a good reactivity with silica and rubber components can be secured.

Examples of the compound comprising the bond unit A represented by the formula (5) and the bond unit B represented by the formula (6) include, for example, NXT-Z30, NXT-Z45, NXT-Z60, and NXT-Z100 manufactured by Momentive Performance Materials, and the like. They may be used alone, or two or more thereof may be used in combination.

A content of the silane coupling agent having a mercapto group is preferably 0.5 parts by mass or more, more

preferably 1 part by mass or more, further preferably 2 parts by mass or more, particularly preferably 4 parts by mass or more, based on 100 parts by mass of silica, from the viewpoint of reduction in rolling resistance. Moreover, it is preferably 20 parts by mass or less, more preferably 12 parts by mass or less, further preferably 10 parts by mass or less, particularly preferably 9 parts by mass or less, from the viewpoints of rubber strength and abrasion resistance.

(Other compounding agents)

The rubber composition according to the present invention can appropriately comprise compounding agents conventionally and commonly used in the tire industry, such as, for example, oil, an ester-based plasticizing agent, a resin component, a liquid polymer, an antioxidant, wax, zinc oxide, stearic acid, a cross-linking agent such as sulfur, and a vulcanization accelerator, in addition to the above-described components. Each of the rubber compositions of the first layer and the second layer preferably comprises oil as a compounding agent, and more preferably comprises oil and a resin component.

(Oil)

Examples of oil include, for example, a process oil, a vegetable oil and fat, or a mixture thereof. As the process oil, for example, a paraffin-based process oil, an aroma-based process oil, a naphthene-based process oil, and the like can be used. Examples of the vegetable oil and fat include a castor oil, a cottonseed oil, a linseed oil, a rapeseed oil, a soybean oil, a palm oil, a coconut oil, a peanut oil, rosin, a pine oil, pine tar, a tall oil, a corn oil, a rice oil, a safflower oil, a sesame oil, an olive oil, a sunflower oil, a palm kernel oil, a camellia oil, a jojoba oil, a macadamia nut oil, a tung oil, and the like. They may be used alone, or two or more thereof may be used in combination. Moreover, from the viewpoint of life cycle assessment, as these oil, a lubricating oil after being used in a rubber mixer, an engine, or the like, and a waste cooking oil used in a restaurant or the like may be appropriately used. As oil, for example, products from Idemitsu Kosan Co., Ltd., Sankyo Yuka Kogyo K.K., Japan Energy Corporation, Olisoy, H&R Group, Hokoku Corporation, Showa Shell Sekiyu K.K., Fuji Kosan Co., Ltd., etc. can be used.

When each of the rubber compositions of the first layer, the second layer, and the base rubber layer comprises oil, a content of oil based on 100 parts by mass of the rubber component is preferably 8 parts by mass or more, more preferably 10 parts by mass or more, further preferably 20 parts by mass or more, from the viewpoint of processability. Moreover, it is preferably 80 parts by mass or less, more preferably 75 parts by mass or less, further preferably 70 parts by mass or less, from the viewpoint of abrasion resistance. Besides, in the present specification, the content of oil also includes an amount of oil contained in an oil-extended rubber.

(Ester-based plasticizing agent)

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

When each of the rubber compositions of the first layer, the second layer, and the base rubber layer comprises an ester-based plasticizing agent, a content of the ester-based plasticizing agent based on 100 parts by mass of the rubber component (a total amount of all of a plurality of ester-based plasticizing agents when used in combination) is preferably 5 parts by mass or more, more preferably 10 parts by mass or more, further preferably 15 parts by mass or more, from the viewpoint of wet grip performance. Moreover, it is preferably 120 parts by mass or less, more preferably 100 parts by mass or less, further preferably 90 parts by mass or less, particularly preferably 80 parts by mass or less, from the viewpoint of processability.

(Resin component)

The resin component is not particularly limited, examples of which include a petroleum resin, a terpene-based resin, a rosin-based resin, a phenol-based resin, and the like, which are commonly used in the tire industry. These resin components may be used alone, or two or more thereof may be used in combination.

In the present specification, a "C5-based petroleum resin" refers to a resin obtained by polymerizing a C5 fraction. Examples of the C5 fraction include, for example, a petroleum fraction having 4 to 5 carbon atoms such as cyclopentadiene, pentene, pentadiene, and isoprene. As the C5-based petroleum resin, a dicyclopentadiene resin (DCPD resin) is appropriately used. The DCPD resin may be a hydrogenated resin (hydrogenated DCPD resin). The hydrogenation

treatment to the DCPD resin can be performed by a known method, and a commercially available hydrogenated resin can also be used.

In the present specification, an "aromatic-based petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

In the present specification, a "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, those commercially available from, for example, Tosoh Corporation, Zibo Luhua Hongjin New Material Co., Ltd., etc. can be appropriately used.

Examples of the terpene-based resin include a polyterpene resin consisting of at least one selected from terpene compounds such as α-pinene, β-pinene, limonene, and a dipentene; an aromatic-modified terpene resin made from the terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, α-methylstyrene, vinyltoluene, a divinyltoluene, and the like. Examples of the phenol-based compound used as a raw material for the terpene phenol resin include, for example, phenol, bisphenol A, cresol, xylenol, and the like.

Example of the rosin-based resin include, but not particularly limited to, for example, a natural resin rosin and a rosin-modified resin obtained by modifying it by hydrogenation, disproportionation, dimerization, esterification, or the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 40°C or higher, more preferably 60°C or higher, further preferably 70°C or higher, from the viewpoint of grip performance. Moreover, it is preferably 150°C or lower, more preferably 140°C or lower, further preferably 130°C or lower, from the viewpoints of processability and improvement in dispersibility of a rubber component with a filler. Besides, the softening point of the resin component is measured by the above-described measuring method.

When each of the rubber compositions of the first layer and the second layer comprises a resin component, a content of the resin component based on 100 parts by mass of the rubber component is preferably 1 part by mass or more, more preferably 2 parts by mass or more, further preferable 3 parts by mass or more, particularly preferably 4 parts by mass or more, from the viewpoint of wet grip performance. Moreover, it is preferably 50 parts by mass or less, more preferably 40 parts by mass or less, further preferably 35 parts by mass or less, particularly preferably 10 parts by mass or less, from the viewpoints of reduction in rolling resistance and abrasion resistance. When the base rubber layer comprises a resin component, a content of the resin component based on 100 parts by mass of the rubber component is not particularly limited.

(Liquid polymer)

The liquid polymer is not particularly limited as long as it is a polymer in a liquid state at room temperature (25°C), examples of which include, for example, liquid diene-based polymers such as a liquid styrene-butadiene copolymer (liquid SBR), a liquid butadiene polymer (liquid BR), a liquid isoprene polymer (liquid IR), and a liquid styrene-isoprene copolymer (liquid SIR). The liquid polymer may be used alone, or two or more thereof may be used in combination. Among them, a liquid BR is preferable from the viewpoint of grip performance. A weight-average molecular weight (Mw) of the liquid polymer can be calculated by the above-described method.

When each of the rubber compositions of the first layer, the second layer, and the base rubber layer comprises a liquid polymer, a content of the liquid polymer based on 100 parts by mass of the rubber component (a total amount of a plurality of liquid polymers when used in combination) is preferably 1 part by mass or more, more preferably 3 parts by mass or more, further preferably 5 parts by mass or more, from the viewpoint of grip performance. Moreover, it is preferably 40 parts by mass or less, more preferably 30 parts by mass or less, further preferably 25 parts by mass or less, from the viewpoint of abrasion resistance.

(Antioxidant)

Examples of the antioxidant include, but not particularly limited to, for example, amine-based, quinoline-based,

quinone-based, phenol-based, and imidazole-based compounds, and antioxidants such as a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine, and quinoline-based antioxidants such as 2,2,4-trimethyl-1 ,2-dihydroquinoline polymer and 6-ethoxy-2,2,4-trimethyl-1,2-dihydroquinoline. These antioxidants may be used alone, or two or more thereof may be used in combination.

When each of the rubber compositions of the first layer, the second layer and the base rubber layer comprises an antioxidant, a content of the antioxidant based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

When each of the rubber compositions of the first layer, the second layer and the base rubber layer comprises wax, a content of wax based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of whitening of a tire due to bloom.

When each of the rubber compositions of the first layer, the second layer and the base rubber layer comprises stearic acid, a content of stearic acid based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

When each of the rubber compositions of the first layer, the second layer and the base rubber layer comprises zinc oxide, a content of zinc oxide based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.

(Cross-linking agent)

Sulfur is appropriately used as a cross-linking agent. As sulfur, a powdery sulfur, oil a processing sulfur, a precipitated sulfur, a colloidal sulfur, an insoluble sulfur, a highly dispersible sulfur, and the like can be used.

A content of sulfur when compounded based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of the vulcanizing agent when an oil-containing sulfur is used as the cross-linking agent shall be a total content of pure sulfur comprised in the oil-containing sulfur.

As cross-linking agents other than sulfur, known organic cross-linking agents can also be used. The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like, and among them, 1,6-bis(N,N'-dibenzylthiocarbamoyldithio)hexane is preferable. As these organic cross-linking agents, those commercially available from Taoka Chemical Co., Ltd., LANXESS, Flexsys, etc. can be used.

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and among them, sulfenamide-based vulcanization accelerators and thiuram-based vulcanization accelerators are preferable, and it is more preferable to use two of them in combination, from the viewpoint that desired effects can be obtained more appropriately.

Examples of the sulfenamide-based vulcanization accelerator include CBS (N-cyclohexyl-2-benzothiazolyl sulfenamide), TBBS (N-t-butyl-2-benzothiazolyl sulfenamide), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. They may be used alone, or two or more thereof may be used in combination. Among them, a combination of CBS and TBzTD is particularly preferable from the viewpoint that desired effects can be obtained more appropriately.

A content of the vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

The rubber composition according to the present invention can be produced by a known method, for example, by a method of kneading components other than vulcanizing agents (cross-linking agents) and vulcanization accelerators, of the above-described components, with a known kneading machine used in the general tire industry such as a Banbury mixer, a kneader, and an open roll, then adding the vulcanizing agents and the vulcanization accelerators to the mixture to further knead them, and then vulcanizing them, and the like.

<Tire>

The pneumatic tire according to the present invention comprises a tread comprising the above-described rubber composition for tread and is appropriately used for a tire for a passenger car, a high-performance tire for a passenger car, and the like. In particular, it is preferably used as a tire for a passenger car.

The tire comprising the tread comprising the above-described rubber composition for tread can be produced by a usual method using the above-described rubber composition for tread. That is, the tire can be produced by extruding an unvulcanized rubber composition compounded from the rubber component and other components as necessary into a tread shape, attaching it together with other tire members on a tire forming machine, and molding them by a usual method to form an unvulcanized tire, followed by heating and pressurizing this unvulcanized tire in a vulcanizing machine.

EXAMPLE

Hereinafter, the present invention will be described based on Examples, though the present invention is not limited to these Examples.

Various chemicals used in Examples and Comparative examples are collectively shown below.

SBR1: HPR830E manufactured by JSR Corporation (styrene content: 39.5% by mass, vinyl content: 38.5 mol%, Tg: -23°C, oil-extending amount: 10 parts by mass based on 100 parts by mass of rubber component)

SBR2: Modified solution-polymerized SBR produced in Production example 2 which will be described later (styrene content: 35% by mass, vinyl content: 50 mol%, Tg: -24°C, non-oil-extended product)

SBR3: HPR850 manufactured by JSR Corporation (styrene content: 27.5% by mass, vinyl content: 59.0 mol%, Tg: -24°C, non-oil-extended product)

SBR4: HPR840 manufactured by JSR Corporation (styrene content: 10.0% by mass, vinyl content: 42.0 mol%, Tg: -60°C, non-oil extended product)

NR: TSR20

BR: UBEPOL BR (Registered Trademark) 150B manufactured by Ube Industries, Ltd. (vinyl bond amount: 1.5 mol%, cis 1,4-content: 97%, Mw: 440,000)

Carbon black: DIABLACK N220 manufactured by Mitsubishi Chemical Corporation ($N_2SA$: 115 $m^2/g$)

Silica 1: 9100GR manufactured by Evonik Degussa GmbH ($N_2SA$: 235 $m^2/g$, average primary particle size: 15.6 nm)

Silica 2: ZEOSIL 1115MP manufactured by Solvay Japan, Ltd. ($N_2SA$: 115 $m^2/g$, average primary particle size: 23.8 nm)

Silane coupling agent: NXT-Z manufactured by Momentive Performance Materials

Oil: VivaTec 400 manufactured by H&R Group (TDAE oil)

Ester-based plasticizing agent: TOP manufactured by DAIHACHI CHEMICAL INDUSTRY CO., LTD.

Resin component 1: Sylvatraxx (Registered Trademark) 4401 manufactured by Arizona Chemical Company, LLC (copolymer of $\alpha$-methylstyrene and styrene, softening point: 85°C, Tg: 43°C)

Resin component 2: P125 manufactured by Yasuhara Chemical Co., Ltd. (hydrogenated polyterpene resin, softening point: 125°C, Tg: 67°C)

Resin component 3: Oppera PR-120 manufactured by ExxonMobil (hydrogenated dicyclopentadiene resin, softening point: 120°C, Tg: 62°C)

Resin component 4: Petrotack 100V manufactured by Tosoh Corporation (C5-C9 mixed resin, softening point: 95°C, Tg: 62°C)

Liquid polymer: RICON 134 manufactured by Cray VALLEY (liquid BR, Mw: 8000, vinyl content: 28 mol%)

Antioxidant: Nocrac 6C manufactured by Ouchi Shinko Chemical Industry Co., Ltd. (N-(1,3-dimethylbutyl)-N'-phenyl-p-phenylenediamine)

Antioxidant: Nocrac RD manufactured by Ouchi Shinko Chemical Industry Co., Ltd. (poly(2,2,4-trimethyl-1,2-dihydroquinoline))
Wax: OZOACE 0355 manufactured by Nippon Seiro Co., Ltd.
Stearic acid: Bead stearic acid "CAMELLIA" manufactured by NOF CORPORATION
Zinc oxide: Zinc oxide No. 1 manufactured by Mitsui Mining & Smelting Co., Ltd.
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Sanceler TBZTD manufactured by Sanshin Chemical Industry Co., Ltd. (Tetrabenzyl Thiuram Disulfide (TBzTD))

Production example 2: Synthesis of SBR2

Cyclohexane, tetrahydrofuran, styrene, and ethylene glycol diethyl ether were charged into an autoclave reactor subjected to nitrogen purge. A temperature of the contents in the reactor was adjusted to 20°C, and then bis(diethylamino) methylvinylsilane and n-butyllithium were charged as a cyclohexane solution and a n-hexane solution, respectively, to initiate polymerization. Copolymerization of 1,3-butadiene and styrene was performed for 3 hours while continuously supplying monomers into the reactor at a stirring speed of 130 rpm and at a temperature of 65°C inside the reactor. Next, the obtained polymer solution was stirred at a stirring speed of 130 rpm, and N-(3-dimethylaminopropyl)acrylamide was added to perform reaction for 15 minutes. After completion of the polymerization reaction, 2,6-di-tert-butyl-p-cresol was added. Next, the mixture was subjected to removal of solvent by a steam stripping and dried by a heat roll which temperature was adjusted to 110°C to obtain a SBR2.

(Examples and Comparative examples)

According to the compounding formulations shown in Tables 1 and 2, using a 1.7 L closed Banbury mixer, all chemicals other than sulfur and vulcanization accelerators were kneaded until a discharge temperature at 150°C to 160°C for 1 to 10 minutes to obtain a kneaded product. Next, using a twinscrew open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was molded into each shape of the first layer (thickness: 3.5 mm), the second layer (thickness: 3.5 mm), and the base rubber layer (thickness: 1.0 mm) of the tread, and attached together with other tire members, preparing an unvulcanized tire, followed by vulcanized at 170°C to obtain each test tire shown in Tables 3 to 5 (size: 205/65R16 or 195/65R15). Besides, a groove depth (deepest part) of a circumferential groove was set to be 6.5 mm.

<Measurement of glass transition temperature (Tg)>

For each rubber specimen produced by being cut out with length 20 mm × width 4 mm × thickness 1 mm from inside of a rubber layer of a tread part of each test tire so that a tire circumferential direction is on a long side, a temperature distribution curve of a loss tangent tan δ was measured under a condition of a frequency of 10 Hz, an initial strain of 10%, an amplitude of ± 0.5%, and a temperature rising rate of 2°C/min, using the EPLEXOR series manufactured by gabo Systemtechnik GmbH, and a temperature corresponding to the largest tan δ value in the obtained temperature distribution curve (tan δ peak temperature) was defined as a glass transition temperature (Tg). Besides, a thickness direction of a sample was defined as a tire radial direction.

<High-speed WET turning performance>

The obtained test tire was assembled on a standardized rim, filled with 250 kPa of air, and then mounted to all wheels of a domestic FF vehicle (2000 cc). Sensory evaluation of turning performance was performed on a scale of 5 points when the vehicle was run on a wet road surface at 100 km/h with the test tire being mounted thereto, in which the evaluation was performed by 20 drivers to calculate a total score of the evaluation results. From the obtained results, turning performance was indicated as an index with the result in Comparative example 5 being as 100, to obtain an evaluation result for each tire.

(High-speed WET turning performance index) = (total score of evaluation for each tire) / (total score of Comparative example 5) × 100

Table 1

| | Compounding of rubber layer | | | | | | | | |
|---|---|---|---|---|---|---|---|---|---|
| | A | B | C | D | E | F | G | H | I |
| Compounding amount (part by mass) | | | | | | | | | |
| SBR1 | - | - | - | 75 | 90 | - | - | - | - |
| SBR2 | 80 | 80 | 80 | - | - | 75 | - | - | - |
| SBR3 | - | - | - | - | - | - | 65 | 65 | 65 |
| SBR4 | - | - | - | - | - | - | - | - | - |
| NR | - | - | - | - | - | - | - | - | - |
| BR | 20 | 20 | 20 | 25 | 10 | 25 | 35 | 35 | 35 |
| Carbon black | 5.0 | 5.0 | 5.0 | 5.0 | 5.0 | 5.0 | 5.0 | 40 | 40 |
| Silica 1 | 100 | 125 | - | - | - | 70 | 70 | 30 | |
| Silica 2 | - | - | 125 | 125 | 125 | - | - | - | 30 |
| Silane coupling agent | 8.0 | 10 | 7.5 | 7.5 | 7.5 | 5.6 | 5.6 | 2.4 | 1.8 |
| Oil | 20 | 40 | 40 | 55 | 55 | 15 | 25 | 25 | 25 |
| Ester-based plasticizing agent | - | - | - | - | - | - | - | - | - |
| Resin component 1 | 20 | 20 | 20 | 5.0 | 5.0 | 10 | - | - | - |
| Resin component 2 | - | - | - | - | - | - | - | - | - |
| Resin component 3 | - | - | - | - | - | - | - | - | - |
| Resin component 4 | - | - | - | - | - | - | - | - | - |
| Antioxidant 1 | 1.5 | 1.5 | 1.5 | 1.5 | 1.5 | 1.5 | 1.5 | 1.5 | 1.5 |
| Antioxidant 2 | 1.0 | 1.0 | 1.0 | 1.0 | 1.0 | 1.0 | 1.0 | 1.0 | 1.0 |
| Liquid polymer | - | - | - | - | - | - | - | - | - |
| Wax | 1.0 | 1.0 | 1.0 | 1.0 | 1.0 | 1.0 | 1.0 | 1.0 | 1.0 |
| Stearic acid | 1.5 | 1.5 | 1.5 | 1.5 | 1.5 | 1.5 | 1.5 | 1.5 | 1.5 |
| Zinc oxide | 2.5 | 2.5 | 2.5 | 2.5 | 2.5 | 2.5 | 2.5 | 2.5 | 2.5 |
| Sulfur | 1.5 | 1.5 | 1.5 | 1.5 | 1.5 | 1.7 | 1.7 | 1.7 | 1.7 |
| Vulcanization accelerator 1 | 2.0 | 2.0 | 2.0 | 2.0 | 2.0 | 2.0 | 2.0 | 2.0 | 2.0 |
| Vulcanization accelerator 2 | 2.0 | 1.5 | 2.0 | 2.0 | 2.0 | 1.8 | 1.8 | 1.0 | 1.0 |
| Physical property | | | | | | | | | |
| Total styrene amount | 28.00 | 28.00 | 28.00 | 29.63 | 35.55 | 26.25 | 17.88 | 17.88 | 17.88 |
| Tg (°C) | -10 | -10 | -10 | -8 | -6 | -18 | -35 | -35 | -35 |

Table 2

| | Compounding of rubber layer | | | | | | | | | |
|---|---|---|---|---|---|---|---|---|---|---|
| | J | K | L | M | N | O | P | Q | R | S |
| Compounding amount (part by mass) | | | | | | | | | | |
| SBR1 | - | 80 | 75 | - | - | - | - | - | - | - |
| SBR2 | 65 | - | - | 80 | 80 | - | - | - | - | - |
| SBR3 | - | - | - | - | - | 80 | 70 | - | - | - |
| SBR4 | - | - | - | - | - | - | - | 70 | 65 | - |
| NR | - | - | - | - | - | - | 20 | 20 | 10 | 60 |
| BR | 35 | 20 | 25 | 20 | 20 | 20 | 15 | 15 | 25 | 40 |
| Carbon black | 5.0 | 5.0 | 5.0 | 5.0 | 5.0 | 5.0 | 5.0 | 5.0 | 5.0 | 35 |
| Silica 1 | 100 | 70 | 80 | - | - | 125 | 125 | 125 | 70 | - |
| Silica 2 | - | - | - | 125 | 125 | - | - | - | - | - |

(continued)

| | Compounding of rubber layer | | | | | | | | | |
|---|---|---|---|---|---|---|---|---|---|---|
| | J | K | L | M | N | O | P | Q | R | S |
| Compounding amount (part by mass) | | | | | | | | | | |
| Silane coupling agent | 8 | 5.6 | 6.4 | 7.5 | 7.5 | 10 | 10 | 10 | 5.6 | - |
| Oil | 10 | 20 | 7.5 | 40 | 40 | 20 | 20 | - | 5.0 | 8.0 |
| Ester-based plasticizing agent | - | - | 30 | - | - | - | - | - | - | - |
| Resin component 1 | 20 | 5.0 | 5.0 | - | - | 40 | 20 | 25 | 20 | 0.5 |
| Resin component 2 | - | - | - | 20 | - | - | 10 | - | - | 0.5 |
| Resin component 3 | - | - | - | - | 20 | - | 10 | 20 | - | 0.5 |
| Resin component 4 | - | - | - | - | - | - | - | - | - | 1.0 |
| Antioxidant 1 | 1.5 | 1.5 | 1.5 | 1.5 | 1.5 | 1.5 | 1.5 | 1.5 | 1.5 | 2.5 |
| Antioxidant 2 | 1.0 | 1.0 | 1.0 | 1.0 | 1.0 | 1.0 | 1.0 | 1.0 | 1.0 | 1.0 |
| Liquid polymer | - | - | - | - | - | - | - | 15 | - | - |
| Wax | 1.0 | 1.0 | 1.0 | 1.0 | 1.0 | 1.0 | 1.0 | 1.0 | 1.0 | 2.0 |
| Stearic acid | 1.5 | 1.5 | 1.5 | 1.5 | 1.5 | 1.5 | 1.5 | 1.5 | 1.5 | 2.0 |
| Zinc oxide | 2.5 | 2.5 | 2.5 | 2.5 | 2.5 | 2.5 | 2.5 | 2.5 | 2.5 | 3.5 |
| Sulfur | 1.5 | 1.7 | 1.7 | 1.5 | 1.5 | 1.5 | 1.5 | 1.5 | 1.7 | 2.0 |
| Vulcanization accelerator 1 | 2.0 | 2.0 | 2.0 | 2.0 | 2.0 | 2.0 | 2.0 | 2.0 | 2.0 | 2.0 |
| Vulcanization accelerator 2 | 2.0 | 1.8 | 1.8 | | 2.0 | 2.0 | 2.0 | 2.0 | 1.8 | - |
| Physical property | | | | | | | | | | |
| Total styrene amount | 22.75 | 31.60 | 29.63 | 28.00 | 28.00 | 22.00 | 19.25 | 7.00 | 6.50 | 0.00 |
| Tg (°C) | -15 | -8 | -32 | -12 | -12 | -14 | -12 | -13 | -26 | -70 |

Table 3

| | Example | | | | | | | |
|---|---|---|---|---|---|---|---|---|
| | 1 | 2 | 3 | 4 | 5 | 6 | 7 | 8 |
| First compounding | D | C | A | M | N | A | A | A |
| Second compounding | I | I | I | H | H | H | G | G |
| Base rubber layer compounding | S | S | S | S | S | S | S | S |
| Tg (°C) | | | | | | | | |
| $Tq_1$ | -8 | -10 | -10 | -12 | -12 | -10 | -10 | -10 |
| $Tg_2$ | -35 | -35 | -35 | -35 | -35 | -35 | -35 | -35 |
| $Tg_1$-$Tg_2$ | 27 | 25 | 25 | 23 | 23 | 25 | 25 | 25 |
| Total styrene amount (%) | | | | | | | | |
| S1 | 29.63 | 28.00 | 28.00 | 28.00 | 28.00 | 28.00 | 28.00 | 28.00 |
| S2 | 17.88 | 17.88 | 17.88 | 17.88 | 17.88 | 17.88 | 17.88 | 17.88 |
| Tire | | | | | | | | |
| Tire size | 205/55R16 | 205/55R16 | 205/55R16 | 205/55R16 | 205/55R16 | 205/55R16 | 205/55R16 | 205/55R16 |
| Cross-sectional width (mm) | 205 | 205 | 205 | 205 | 205 | 205 | 205 | 205 |
| Belt layer width (mm) | 163.60 | 163.60 | 163.60 | 163.60 | 163.60 | 163.60 | 163.60 | 149.25 |
| Outer diameter (mm) | 631.9 | 631.9 | 631.9 | 631.9 | 631.9 | 631.9 | 631.9 | 631.9 |
| $(\pi/4) \times (Dt2/Wt)$ | 1529.8 | 1529.8 | 1529.8 | 1529.8 | 1529.8 | 1529.8 | 1529.8 | 1529.8 |
| (B-16)/Wt | 0.72 | 0.72 | 0.72 | 0.72 | 0.72 | 0.72 | 0.72 | 0.64 |

| | Example | | | | | | | |
|---|---|---|---|---|---|---|---|---|
| | 1 | 2 | 3 | 4 | 5 | 6 | 7 | 8 |
| $(S1 \times B - 480)/Wt$ | 21.3 | 20.0 | 20.0 | 20.0 | 20.0 | 20.0 | 20.0 | 20.0 |
| Opening area of small hole ($mm^2$) | None | None | None | None | None | None | None | None |
| Index | | | | | | | | |
| High-speed WET turning performance | 104 | 110 | 114 | 112 | 114 | 120 | 124 | 130 |

Table 4

| | Example | | | | | | | | |
|---|---|---|---|---|---|---|---|---|---|
| | 9 | 10 | 11 | 12 | 13 | 14 | 15 | 16 | 17 |
| First compounding | A | B | A | O | P | Q | A | A | P |
| Second compounding | F | F | F | R | R | R | I | F | R |
| Base rubber layer compounding | S | S | S | S | S | S | S | S | S |
| Tg (°C) | | | | | | | | | |
| $Tg_1$ | -10 | -10 | -10 | -14 | -12 | -13 | -10 | -10 | -12 |
| $Tg_2$ | -18 | -18 | -18 | -26 | -26 | -26 | -35 | -18 | -26 |
| $Tg_1$-$Tg_2$ | 8 | 8 | 8 | 12 | 14 | 13 | 25 | 8 | 14 |
| Total styrene amount (%) | | | | | | | | | |
| S1 | 28.00 | 28.00 | 28.00 | 22.00 | 19.25 | 7 | 28.00 | 28.00 | 19.25 |
| S2 | 26.25 | 26.25 | 26.25 | 6.5 | 6.5 | 6.5 | 17.88 | 26.25 | 6.5 |
| Tire | | | | | | | | | |
| Tire size | 205/55R16 | 205/55R16 | 195/65 R 15 | 195/65 R 15 | 195/65 R 15 | 195/65 R 15 | 205/55R16 | 205/55R16 | 195/65 R 15 |
| Cross-sectional width (mm) | 205 | 205 | 195 | 195 | 195 | 195 | 205 | 205 | 195 |
| Belt layer width (mm) | 163.60 | 163.60 | 156.40 | 156.40 | 156.4 | 156.4 | 163.6 | 163.6 | 156.4 |
| Outer diameter (mm) | 631.9 | 631.9 | 634.5 | 634.50 | 634.5 | 634.5 | 631.9 | 631.9 | 634.5 |
| $(\pi/4) \times (Dt2/Wt)$ | 1529.8 | 1529.8 | 1621.5 | 1621.5 | 1621.5 | 1621.5 | 1529.8 | 1529.8 | 1621.5 |
| | Example | | | | | | | | |
| | 9 | 10 | 11 | 12 | 13 | 14 | 15 | 16 | 17 |
| (B-16)/Wt | 0.72 | 0.72 | 0.72 | 0.72 | 0.72 | 0.72 | 0.72 | 0.72 | 0.72 |
| $(S1 \times B - 480)/Wt$ | 20.0 | 20.0 | 20.0 | 15.2 | 13.0 | 3.2 | 20.0 | 20.0 | 13.0 |
| Opening area of small hole ($mm^2$) | None | None | None | None | None | None | 3.1 | 3.1 | 3.1 |
| Index | | | | | | | | | |
| High-speed WET turning performance | 136 | 140 | 148 | 154 | 160 | 168 | 118 | 140 | 168 |

Table 5

| | Comparative example | | | | |
|---|---|---|---|---|---|
| | 1 | 2 | 3 | 4 | 5 |
| First compounding | A | J | L | E | A |
| Second compounding | F | G | F | F | K |
| Base rubber layer compounding | S | S | S | S | S |
| Tg (°C) | | | | | |
| $Tg_1$ | -10 | -15 | -32 | -6 | -10 |
| $Tg_2$ | -18 | -35 | -18 | -18 | -8 |
| $Tg_1$-$Tg_2$ | 8 | 20 | -14 | 12 | -2 |
| Total styrene amount (%) | | | | | |
| S1 | 28.00 | 22.75 | 29.63 | 35.55 | 28.00 |
| S2 | 26.25 | 17.88 | 26.25 | 26.25 | 31.60 |
| Tire | | | | | |
| Tire size | 205/55R16 | 205/55R16 | 205/55R16 | 205/55R16 | 205/55R16 |
| Cross-sectional width (mm) | 205 | 205 | 205 | 205 | 205 |
| Belt layer width (mm) | 175.90 | 163.60 | 163.60 | 163.60 | 163.60 |
| Outer diameter (mm) | 631.9 | 631.9 | 631.9 | 631.9 | 631.9 |
| $(\pi/4) \times (Dt2/Wt)$ | 1529.8 | 1529.8 | 1529.8 | 1529.8 | 1529.8 |
| (B-16)/Wt | 0.78 | 0.72 | 0.72 | 0.72 | 0.72 |
| $(S1 \times B - 480)/Wt$ | 21.7 | 15.8 | 21.3 | 26.0 | 20.0 |
| Opening area of small hole ($mm^2$) | 3.1 | 3.1 | 3.1 | 3.1 | 3.1 |
| Index | | | | | |
| High-speed WET turning performance | 88 | 92 | 90 | 96 | 100 |

From the results in Tables 3 and 4, it has been found that a tire is excellent in high-speed WET turning performance, in which a total width of the tire and a breaker width of the tire satisfy the predetermined requirements, compounding of a rubber composition of a tread surface rubber layer is subjected under a specific condition, and a total styrene amount of the rubber composition of the tread surface rubber layer is set to be larger than a total styrene amount of a rubber composition of a tread inner rubber layer.

REFERENCE SIGNS LIST

Wt Cross-sectional width
B Belt layer width
Ht Cross-sectional height
Dt Tire outer diameter
1 Circumferential groove
2 Land part
3 Belt layer
4 First layer
5 Second layer
6 Base rubber layer
7 Sidewall
8 Inner liner

9 Clinch
10 Tread
C Tire circumferential direction
W Tire width direction
Te Tread end
21 Lateral groove
22 Sipe
23 Center Sipe
24 Small hole
30 Bead
31 Bead core
32 Rim

**Claims**

1. A tire having a tread part and a belt layer,

the tread part comprising at least a first layer forming a tread surface and a second layer adjacent to the inner side of the first layer in a tire radial direction,
wherein a rubber component of the first layer and a rubber component of the second layer each comprises a styrene butadiene rubber,
wherein a content of a butadiene rubber in the rubber component of the first layer is 25% by mass or less,
wherein a glass transition temperature $Tg_1$ (°C) of the rubber composition of the first layer is -18°C or higher,
wherein a total styrene amount S1 (% by mass) in the rubber component of the first layer is 1 to 35% by mass,
wherein a total styrene amount S2 (% by mass) in the rubber component of the second layer is smaller than S1, and
wherein a cross-sectional width Wt (mm) of the tire and a belt layer width B (mm) of the tire when a standardized load is applied to the tire and the tread is pressed against a flat surface in a standardized state satisfy the following inequality (1):

$$(B-16)/Wt \leqq 0.75 \cdots (1)$$

wherein the standardized load and the standardized state are such as defined in the description.

2. The tire of claim 1, wherein Wt, B, and S1 satisfy the following inequality (2):

$$(S1 \times B - 480)/Wt \leqq 21 \cdots (2)$$

3. The tire of claim 1 or 2, wherein the rubber composition of the first layer and/or the rubber composition of the second layer comprises silica having an average primary particle size of 20 nm or less.

4. The tire of any one of claims 1 to 3, wherein the rubber composition of the first layer and/or the rubber composition of the second layer comprises 40 to 120 parts by mass of silica based on 100 parts by mass of the rubber component.

5. The tire of any one of claims 1 to 4, wherein a glass transition temperature $Tg_2$ (°C) of the rubber composition of the second layer is -30°C or higher.

6. The tire of any one of claims 1 to 5, wherein $Tg_1$-$Tg_2$ is 2°C or higher.

7. The tire of any one of claims 1 to 6, wherein a content of a butadiene rubber in the rubber component of the second layer is 30% by mass or less.

8. The tire of any one of claims 1 to 7, wherein S2 is 15 to 35% by mass.

9. The tire of any one of claims 1 to 8, wherein the tread part comprises a base rubber layer adjacent to an outer side of a belt layer in a tire radial direction, the base rubber layer being formed of a rubber composition comprising a rubber component which comprises at least one of an isoprene-based rubber and a butadiene rubber.

10. The tire of any one of claims 1 to 9, wherein, when a tire outer diameter is Dt (mm), Wt and Dt satisfy the following inequality (3):

$$(\pi/4) \times (Dt2/Wt) \geqq 1500 \cdots (3)$$

11. The tire of any one of claims 1 to 10, wherein the tread part has land parts partitioned by one or more circumferential grooves extending continuously in a tire circumferential direction and at least one of the land parts has one or more small holes whose opening area to the tread surface is 1 to 15 $mm^2$.

## Patentansprüche

1. Reifen, der einen Laufstreifenteil und eine Gürtelschicht aufweist,

   wobei der Laufstreifenteil mindestens eine erste Schicht, die eine Laufstreifenoberfläche bildet, und eine zweite Schicht, die zu der Innenseite der ersten Schicht in einer Reifenradialrichtung benachbart ist, umfasst,
   wobei eine Kautschukkomponente der ersten Schicht und eine Kautschukkomponente der zweiten Schicht jeweils einen Styrol-ButadienKautschuk umfasst,
   wobei ein Gehalt eines Butadienkautschuks in der Kautschuckomponente der ersten Schicht 25 Massen-% oder weniger beträgt,
   wobei eine Glasübergangstemperatur $Tg_1$ (°C) der Kautschukzusammensetzung der ersten Schicht -18°C oder höher ist,
   wobei eine gesamte Styrolmenge S1 (Massen-%) in der Kautschuckomponente der ersten Schicht 1 bis 35 Massen-% beträgt,
   wobei eine gesamte Styrolmenge S2 (Massen-%) in der Kautschuckomponente der zweiten Schicht kleiner als S1 ist, und
   wobei eine Querschnittsbreite Wt (mm) des Reifens und eine Gürtelschichtbreite B (mm) des Reifens, wenn eine genormte Last auf den Reifen aufgebracht wird und der Laufstreifen gegen eine ebene Oberfläche gedrückt wird, in einem genormten Zustand der folgenden Ungleichung (1) genügen:

$$(B-16)/Wt \leqq 0{,}75 \cdots (1)$$

   wobei die genormte Last und der genormte Zustand so sind wie in der Beschreibung definiert.

2. Reifen nach Anspruch 1, wobei Wt, B und S1 der folgenden Ungleichung (2) genügen:

$$(S1 \times B - 480)/Wt \leqq 21 \cdots (2)$$

3. Reifen nach Anspruch 1 oder 2, wobei die Kautschukzusammensetzung der ersten Schicht und/oder die Kautschukzusammensetzung der zweiten Schicht Siliziumdioxid umfasst, das eine mittlere Primärpartikelgröße von 20 nm oder weniger aufweist.

4. Reifen nach einem der Ansprüche 1 bis 3, wobei die Kautschukzusammensetzung der ersten Schicht und/oder die Kautschukzusammensetzung der zweiten Schicht 40 bis 120 Massenteile Siliziumdioxid umfasst, bezogen auf 100 Massenteile der Kautschukkomponente.

5. Reifen nach einem der Ansprüche 1 bis 4, wobei eine Glasübergangstemperatur $Tg_2$ (°C) der Kautschukzusammensetzung der zweiten Schicht -30°C oder höher ist.

6. Reifen nach einem der Ansprüche 1 bis 5, wobei $Tg_1$-$Tg_2$ 2°C oder höher ist.

7. Reifen nach einem der Ansprüche 1 bis 6, wobei ein Gehalt eines Butadienkautschuks in der Kautschukkomponente der zweiten Schicht 30 Massen-% oder weniger beträgt.

8. Reifen nach einem der Ansprüche 1 bis 7, wobei S2 15 bis 35 Massen-% beträgt.

**9.** Reifen nach einem der Ansprüche 1 bis 8, wobei der Laufstreifenteil eine Basiskautschukschicht, die zu einer Außenseite einer Gürtelschicht in einer Reifenradialrichtung benachbart ist, umfasst, wobei die Basiskautschukschicht mit einer Kautschukzusammensetzung gebildet ist, die eine Kautschukkomponente umfasst, welche mindestens einen von einem Isopren-basierten Kautschuk und einem Butadienkautschuk umfasst.

**10.** Reifen nach einem der Ansprüche 1 bis 9, wobei, wenn ein Reifenaußendurchmesser Dt (mm) ist, Wt und Dt der folgenden Ungleichung (3) genügen:

$$(\pi/4) \times (Dt2/Wt) \geqq 1500 \cdots (3)$$

**11.** Reifen nach einem der Ansprüche 1 bis 10, wobei der Laufstreifenteil Positivprofilteile aufweist, die durch eine oder mehrere sich durchgehend in einer Reifenumfangsrichtung erstreckende Umfangsrillen unterteilt sind, und mindestens einer der Positivprofilteile ein oder mehrere kleine Löcher aufweist, deren Öffnungsfläche zur Laufstreifenoberfläche 1 bis 15 $mm^2$ beträgt.

**Revendications**

**1.** Pneu ayant une partie de bande de roulement et une couche de ceinture, la partie de bande de roulement comprenant au moins une première couche formant une surface de bande de roulement et une seconde couche adjacente au côté interne de la première couche dans une direction radiale, dans lequel un composant de caoutchouc de la première couche et un composant de caoutchouc de la seconde couche comprennent chacun un caoutchouc styrène butadiène,

dans lequel une teneur d'un caoutchouc de butadiène dans le composant de caoutchouc de la première couche est de 25 % en masse ou moins, dans lequel une température de transition vitreuse $Tg_1$ (°C) de la composition de caoutchouc de la première couche est de -18 °C ou plus,
dans lequel une quantité de styrène totale S1 (% en masse) dans le composant de caoutchouc de la première couche est de 1 à 35 % en masse, dans lequel une quantité de styrène totale S2 (% en masse) dans le composant de caoutchouc de la seconde couche est plus petite que S1 et dans lequel une largeur transversale Wt (mm) du pneu et une largeur B de couche de ceinture (mm) du pneu lorsqu'une charge standardisée est appliquée au pneu et que la bande de roulement est pressée contre une surface plate dans un état standardisé satisfont l'inégalité (1) suivante :

$$(B - 16)/Wt \leq 0{,}75 \qquad (1)$$

dans lequel la charge standardisée et l'état standardisé sont tels que définis dans la description.

**2.** Pneu selon la revendication 1, dans lequel Wt, B et S1 satisfont l'inégalité (2) suivante :

$$(S1 \times B - 480)/Wt \leq 21 \qquad (2)$$

**3.** Pneu selon la revendication 1 ou 2, dans lequel la composition de caoutchouc de la première couche et/ou la composition de caoutchouc de la seconde couche comprennent de la silice ayant une taille de particule primaire moyenne de 20 nm ou moins.

**4.** Pneu selon l'une quelconque des revendications 1 à 3, dans lequel la composition de caoutchouc de la première couche et/ou la composition de caoutchouc de la seconde couche comprennent 40 à 120 parties en masse de silice sur la base de 100 parties en masse du composant de caoutchouc.

**5.** Pneu selon l'une quelconque des revendications 1 à 4, dans lequel une température de transition vitreuse $Tg_2$ (°C) de la composition de caoutchouc de la seconde couche est de -30 °C ou plus.

**6.** Pneu selon l'une quelconque des revendications 1 à 5, dans lequel $Tg_1$-$Tg_2$ est de 2 °C ou plus.

**7.** Pneu selon l'une quelconque des revendications 1 à 6, dans lequel une teneur d'un caoutchouc de butadiène dans le

composant de caoutchouc de la seconde couche est de 30 % en masse ou moins.

8. Pneu selon l'une quelconque des revendications 1 à 7, dans lequel S2 est de 15 à 35 % en masse.

9. Pneu selon l'une quelconque des revendications 1 à 8, dans lequel la partie de bande de roulement comprend une couche de caoutchouc de base adjacente à un côté externe d'une couche de ceinture dans une direction radiale de pneu, la couche de caoutchouc de base étant formée d'une composition de caoutchouc comprenant un composant de caoutchouc qui comprend au moins un d'un caoutchouc à base d'isoprène et d'un caoutchouc de butadiène.

10. Pneu selon l'une quelconque des revendications 1 à 9, dans lequel, lorsqu'un diamètre externe de pneu est Dt (mm), Wt et Dt satisfont l'inégalité (3) suivante :

$$(\pi/4) \times (Dt2/Wt) \geq 1500 \qquad (3)$$

11. Pneu selon l'une quelconque des revendications 1 à 10, dans lequel la partie de bande de roulement a des parties de bord de sillon partitionnées par un ou plusieurs sillons circonférentiels, s'étendant en continu dans une direction circonférentielle de pneu et au moins une des parties de bord de sillon a un ou plusieurs petits trous dont la zone d'ouverture à la surface de la bande de roulement est de 1 à 15 $mm^2$.

FIG. 1

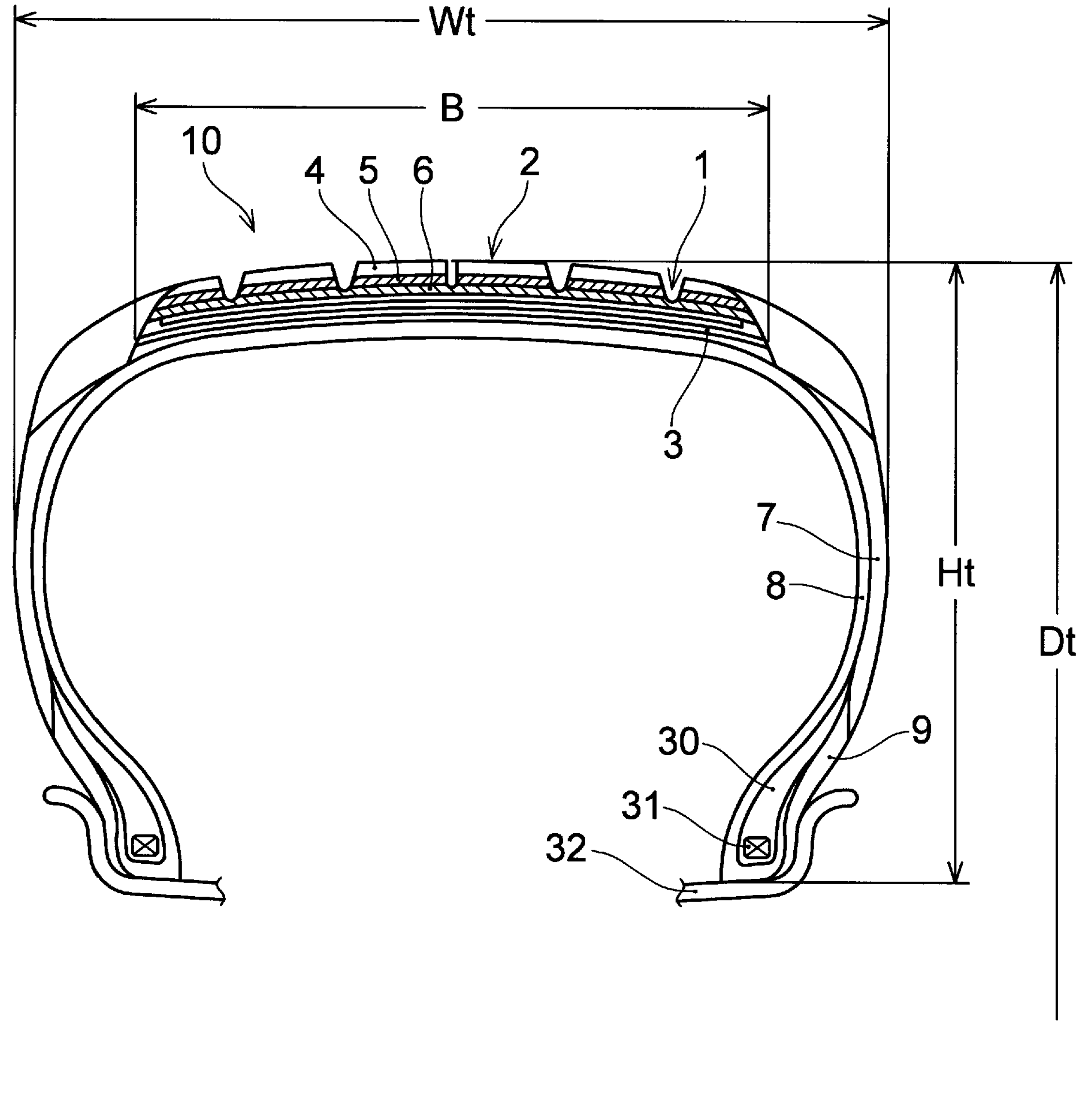

FIG. 2

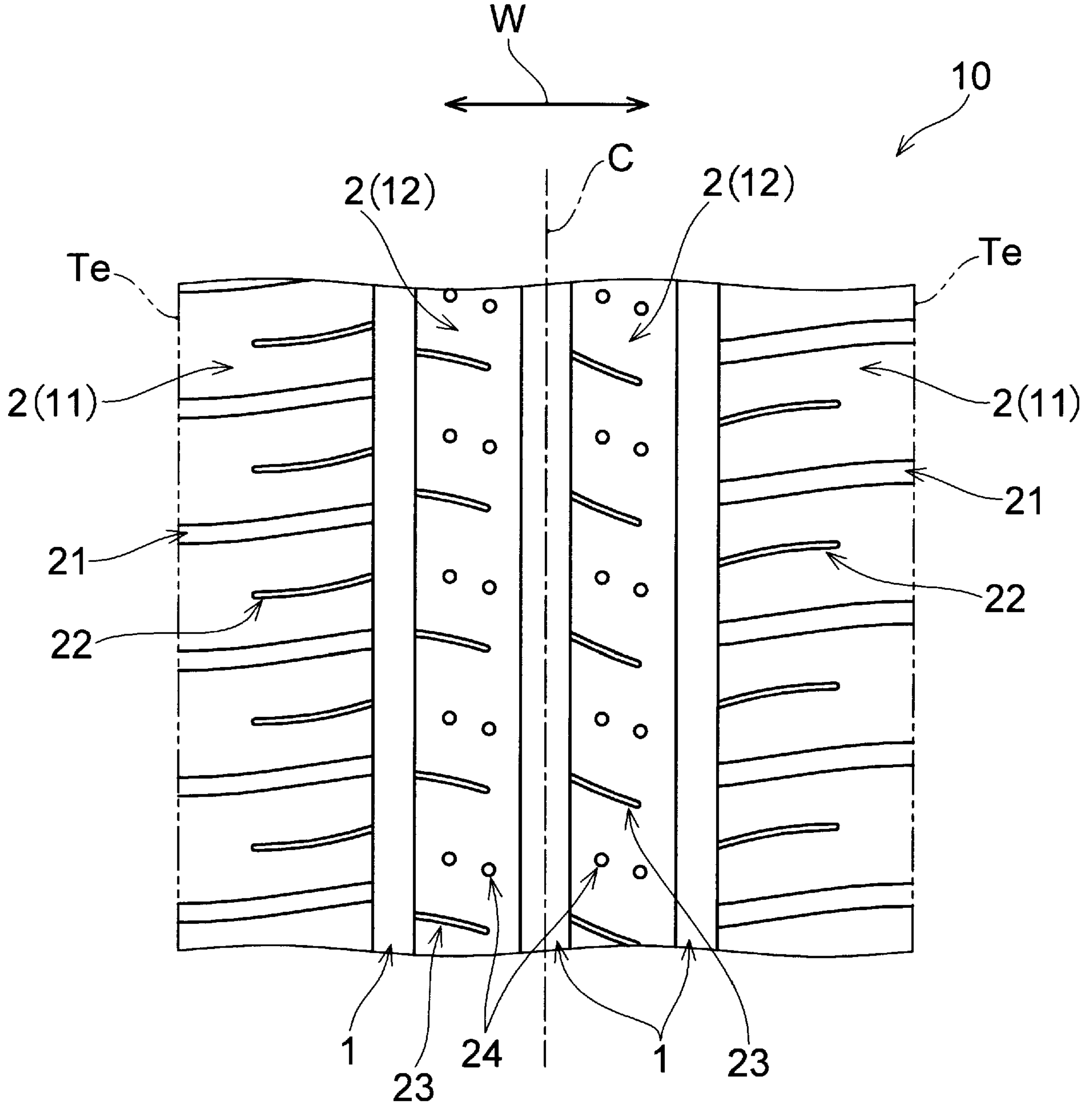

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014162242 A
- EP 3798258 A